# FASCICULE DE BREVET EUROPEEN

(11) **EP 0 893 231 B1**
(45) Date de publication et mention de la délivrance du brevet: **02.05.2002**
(21) Numéro de dépôt: 98202266.7
(22) Date de dépôt: 04.07.1998
(51) Int. Cl.: B29C 49/42, B29C 49/78, B29C 47/22

(54) **Procédé de marquage d'un article produit par extrusion-soufflage**
Verfahren zum Markieren von einem Gegenstand, der durch Extrusionsblasformen hergestellt ist
Method for marking articles produced by extrusion blow moulding

(30) Priorité: 21.07.1997 FR 9709336
(43) Date de publication de la demande: 27.01.1999
(73) Titulaire: SOLVAY (Société Anonyme), 1050 Bruxelles (BE)
(72) Inventeur: Dubois, Eric, 4280 Hannut (BE)
(74) Mandataire: Decamps, Alain René François

(56) Documents cités:
- GB-A- 2 178 361
- US-A- 3 466 704
- PATENT ABSTRACTS OF JAPAN vol. 096, no. 002, 29 février 1996 & JP 07 256780 A (TIGERS POLYMER CORP), 9 octobre 1995
- PATENT ABSTRACTS OF JAPAN vol. 007, no. 124 (M-218), 28 mai 1983 & JP 58 042437 A (ISHIKAWAJIMA HARIMA JUKOGYO KK), 11 mars 1983
- PATENT ABSTRACTS OF JAPAN vol. 005, no. 080 (M-070), 26 mai 1981 & JP 56 028830 A (ISHIKAWAJIMA HARIMA HEAVY IND CO LTD), 23 mars 1981

## Description

La présente invention concerne un procédé de marquage d'un article en matière thermoplastique produit par extrusion-soufflage, ainsi qu'un procédé de contrôle de production d'un tel article par extrusion-soufflage.

La production d'articles en matière thermoplastique par extrusion-soufflage est largement connue et développée industriellement. Elle s'applique aujourd'hui notamment à la production de corps creux tels que des flacons ou des réservoirs de formes complexes et devant satisfaire à des critères spécifiques de plus en plus exigents. Ainsi, dans le cas particulier des réservoirs à carburant, on produit par extrusion-soufflage des corps creux volumineux de formes complexes imposées par l'emplacement précis auquel ils sont destinés et d'épaisseur non uniforme, mais devant satisfaire à des exigences précises notamment en matière de résistance mécanique et d'imperméabilité.

Avant le soufflage, une paraison extrudée peut être façonnée en plusieurs emplacements et selon plusieurs directions par un outillage plus ou moins complexe, afin de l'adapter déjà au profil de l'article devant être produit.

Avant la fermeture du moule, la paraison peut également être présoufflée, ce qui risque d'entraîner une partie de cette paraison en dehors du moule lors de sa fermeture ("flash" latéral).

Enfin, par la variation du comportement rhéologique des matières thermoplastiques, la paraison peut également être décalée longitudinalement et sa partie utile déplacée (dans le "flash" longitudinal) par rapport au moule lors du soufflage.

Au vu de ces éléments, il s'avère aujourd'hui essentiel d'assurer un positionnement longitudinal et azimutal optimal de la paraison avant de procéder à son soufflage, de pouvoir vérifier ce positionnement et de pouvoir, le cas échéant, le modifier au moins pour les cycles ultérieurs de production.

Une méthode possible de contrôle consiste à peser l'article brut produit, les différents "flashs" et l'article ébavuré. Toutefois, ce contrôle n'offre qu'une image globale du procédé, ne permet pas une analyse précise des résultats ni par conséquent une intervention spécifique sur les causes de perturbations.

Selon le document GB-A- 2178361, il est connu d'apposer sur une paraison extrudée d'épaisseur longitudinalement variable, avant soufflage, des repères régulièrement espacés longitudinalement, par déplacement et mise en contact avec la paraison d'un marqueur. Après soufflage, l'épaisseur de l'article produit est mesurée au droit des repères apposés, les résultats sont comparés aux valeurs désirées et, le cas échéant, il est possible de rétroagir en conséquence sur certains paramètres opératoires en vue des cycles suivants.

Néanmoins, en production industrielle, la mise en oeuvre de ce procédé s'avère en fait très délicate, sinon impossible, en particulier en ce que le maintien des marqueurs dans un environnement à température élevée, leur déplacement à chaque cycle et leur mise en contact régulière avec la paraison extrudée à l'état fondu les rend très rapidement inutilisables.

En outre, le déplacement des marqueurs et leur mise en contact avec la paraison tels que décrits sont peu adaptés au marquage en un nombre élevé de positions distinctes de corps creux volumineux et de formes complexes produits par extrusion-soufflage.

La présente invention a dès lors pour objet de permettre le marquage de manière simple, fiable et adaptée aux conditions industrielles de production d'articles en matière thermoplastique produits par extrusion-soufflage.

L'invention concerne à cet effet un procédé de marquage d'un article en matière thermoplastique produit par extrusion d'une paraison et soufflage de ladite paraison, selon lequel la paraison extrudée est marquée avant soufflage par au moins un jet d'une encre à base d'un composé qui cristallise sous forme aciculaire lors du séchage.

Par la mise en oeuvre du procédé de marquage selon l'invention, il a pu être constaté que même en environnement industriel, à des températures élevées à proximité de la tête d'extrusion et de la paraison, non seulement le marquage de la paraison est toujours d'excellente qualité mais également le dispositif de marquage et en particulier l'encre restent opérationnels tant en usage continu de longue durée qu'après de longues périodes d'arrêt de la production.

En outre, il a été avantageusement constaté dans le cas de marquage selon l'invention à l'intervention d'injecteurs qu'il n'était plus requis de déplacer ces injecteurs pour les éloigner de la paraison lorsqu'ils ne sont pas en fonctionnement afin d'éviter leur obturation par séchage de l'encre. En effet, même en cas de séchage partiel de l'encre dans l'injecteur dû en particulier à la température environnante, la forme des cristaux permet leur éjection en vue du marquage de l'article.

Le marquage par jet d'encre peut être réalisé de toute manière connue. Par jet d'encre, on entend désigner ici l'envoi, sans dispersion substantielle, d'une quantité d'encre prédéterminée (m) à partir d'une distance (d) déterminée et à une vitesse (v) élevée et reproductible. Des résultats intéressants ont été obtenus lorsque le rapport d/v, soit la durée du déplacement de l'encre, ne dépasse pas 5 milliseconde. La distance d est adaptée en fonction de l'application spécifique du procédé. De préférence, elle ne dépasse pas 30 cm. En particulier, l'ouverture et la fermeture des injecteurs est réalisée par déplacement d'une aiguille dans l'injecteur. Pour le dosage de l'encre, des électrovannes à temps de réponse court, particulièrement de l'ordre de 10⁻³ s ont été avantageusement mises en oeuvre. En général, le pilotage du ou des jets d'encre est réalisé par un interface adapté par l'homme du métier aux contraintes spécifiques de chaque production. De manière avantageuse, cet interface comprend un bloc électronique recevant des informations provenant notamment du dispositif d'extrusion-soufflage et générant des impulsions qui provoquent le ou les jets d'encre appropriés. De préférence, le temps d'impulsion est de l'ordre de la milliseconde, plus préférentiellement encore environ 1 milliseconde. Un pilotage matriciel du bloc électronique a donné d'excellents résultats, en particulier avec une matrice comportant jusqu'à 64 segments, pouvant représenter jusqu'à 64 positions d'ouverture ou de fermeture de chaque injecteur par cycle de production et donc jusqu'à 64 marques par injecteur en différentes positions de la paraison. Des résultats intéressants ont été obtenus avec une pression dans le circuit d'encre n'excédant pas 3,5 bars. D'autre part, cette pression dans le circuit d'encre est de manière intéressante d'au moins 0,7 bar.

L'invention peut être mise en oeuvre à l'intervention d'un ou plusieurs injecteurs. Elle permet avantageusement l'intervention de plusieurs injecteurs. Le marquage peut ainsi être réalisé aisément en différentes positions azimutales et/ou longitudinales de la paraison. Des résultats particulièrement intéressants ont été obtenus à l'intervention d'un nombre important d'injecteurs, en particulier jusqu'à 24 injecteurs. Dans le cas particulier d'un dispositif de marquage comprenant 24 injecteurs associé à un pilotage matriciel comportant 64 segments, il est donc posibble d'apposer sur la paraison jusqu'à 64 x 24 marques, soit 1536 marques.

Chaque injecteur peut être fixe ou mobile durant chaque cycle de production. Des résultats intéressants ont été obtenus lorsque chaque injecteur est fixe.

L'encre est mise en oeuvre de toute manière connue de l'homme du métier et adaptée en particulier à la production concernée. Il a été constaté que pour le marquage d'une paraison, une solution à base d'un solvant chloré s'avérait particulièrement intéressante. Ces solvants à base de chlore sont tout d'abord largement disponibles et bien acceptés en milieu industriel pour l'application concernée. Ils présentent en outre l'avantage de s'évaporer rapidement aux températures auxquelles ils sont soumis lors du marquage de la paraison. Ainsi, ils permettent le séchage rapide de l'encre, évitent le marquage du moule de soufflage par la paraison et l'éventuel marquage indésirable de la paraison qui sera introduite lors du cycle suivant. Enfin, leur diffusion au sein-même de certaines matières thermoplastiques, telles que notamment les polyoléfines, en fondu favorise la fixation de l'encre sur ces matières thermoplastiques. De manière avantageuse, l'encre est dès lors mise en oeuvre selon l'invention en solution avec un solvant à base de chlore. Parmi les solvants à base de chlore, le trichloréthane, le tétrachlorure de carbone, le chlorobenzène et le tétrahydrofuranne ont donné de bons résultats. D'excellents résultats ont été obtenus avec le trichloréthane.

L'encre retenue peut être de tout type connu. Elle sera en particulier adaptée à la matière thermoplastique sur laquelle elle doit être fixée. Avantageusement, il s'agit d'une encre fluorescente. Par cette caractéristique de fluorescence, la visibilité des marques sur l'article est assurée en mettant en oeuvre un minimum d'encre, ce qui s'avère économique et réduit encore les risques de séchage de l'encre dans le dispositif de marquage et d'obturation de ce dernier. En particulier, l'encre fluorescente retenue n'est visible à l'oeil nu que lorsqu'elle est soumise à un rayonnement dans une gamme de longueurs d'ondes spécifiques. Ainsi, un marquage discret des articles peut être réalisé, qui ne soit pas directement visible par les éventuels intermédiaires qui utiliseront l'article et qui n'en altère pas en permanence l'apparence au regard de l'utilisateur final.

D'excellents résultats ont été obtenus lorsque le composé qui cristallise sous forme aciculaire lors du séchage est le (2,5-bis-(5'-tert-butyl-benzoxazolyl-(2'))thiophène).

Par le procédé selon l'invention, la paraison extrudée peut être marquée en une ou plusieurs positions distinctes. Avantageusement, la paraison extrudée est marquée en plusieurs positions distinctes, en particulier selon différentes positions azimutales et/ou longitudinales. Par la simplicité et la fiabilité du procédé, il est possible en particulier de marquer la paraison extrudée en certaines positions précises devant correspondre à des parties critiques de l'article après soufflage (surépaisseurs ou parties amincies par un étirage plus important, parties plus sévèrement tolérancées pour assemblage ultérieur, parties qui seront particulièrement sollicitées lors de l'utilisation de l'article,...).

Le marquage peut en outre comprendre des indications (producteur, date, site de production, composition, ...), sous forme directement lisible ou non (code-barres,...) qui permettront une identification précise de l'article durant toute sa vie et même le cas échéant en vue de son recyclage. Le marquage peut enfin comporter un traitement local de préparation de la paraison en vue de l'apposition ultérieure sur l'article produit d'un moyen quelconque d'identification.

Lors de l'extrusion-soufflage, il est en particulier connu de façonner la paraison par un ou plusieurs outils VWDS-WBK : Vertical Wall Distribution System - Wall SchlauchBildung korrektur, PWDS : Profile Wall Distribution System, SFDR : Static Flexible Deformable Ring,...tels que bien connus des fabricants de dispositifs d'extrusion-soufflage), en un nombre fixé d'emplacements où ils peuvent modifier notamment l'épaisseur et/ou la forme de la paraison en fonction d'un profil prédéterminé avant soufflage. Le procédé selon l'invention s'applique avantageusement à une paraison extrudée qui est façonnée en au moins un emplacement avant d'être marquée en cet emplacement. En effet, un tel marquage de la paraison permet notamment après le soufflage de l'article de vérifier si les emplacements où la paraison a été façonnée correspondent effectivement aux parties souhaitées de l'article et, le cas échéant, de rétroagir et d'adapter en conséquence certains paramètres opératoires.

Ainsi qu'il a déjà été évoqué, le procédé de marquage peut être appliqué à la production de très nombreux articles de toutes formes et de tous volumes par extrusion-soufflage, tels que notamment flacons, réservoirs et tubulures y associées. Il est particulièrement approprié dans le cas où l'article est un réservoir et plus particulièrement encore dans le cas où l'article est un réservoir à carburant. Il s'applique aussi avantageusement à une tubulure d'alimentation en carburant.

Le procédé selon l'invention est applicable à une paraison d'épaisseur constante ou non. Il est avantageusement mis en oeuvre sur une paraison d'épaisseur non constante. En effet, ainsi qu'il a été exposé ci-dessus, le procédé permet notamment d'identifier par marquage certaines parties critiques de la paraison d'épaisseur particulière et de vérifier ensuite leur position effective sur l'article produit.

La matière thermoplastique peut être constituée d'un ou plusieurs polymères. Les polymères peuvent être des homopolymères, copolymères ou leurs mélanges. A titre de tels polymères, on peut retenir par exemple des polyoléfines ou des polymères du chlorure de vinyle. De bons résultats ont été obtenus à partir d'une polyoléfine, en particulier à partir d'un polypropylène ou d'un polyéthylène, de préférence à partir d'un polyéthylène. D'excellents résultats ont été obtenus à partir d'un polyéthylène haute densité (PEHD).

A la matière thermoplastique peuvent évidemment être ajoutés un ou plusieurs additifs usuels tels que notamment antioxydants, antiacides, stabilisants ou pigments.

L'article peut être essentiellement constitué d'une seule ou de plusieurs matières thermoplastiques. En particulier, il peut s'agir d'un article multicouche.

Des résultats très intéressants ont été obtenus lorsque la paraison est, au moins quant à la surface de marquage, à base de polyoléfine et, plus particulièrement, lorsque au moins la couche superficielle sur laquelle le marquage est réalisé est à base de polyoléfine.

Le marquage peut être réalisé sur la surface externe ou interne de l'article. Souvent, par commodité de réalisation et de lecture ultérieure du marquage, il est réalisé sur la surface externe de l'article.

Le marquage n'est nullement incompatible avec un traitement superficiel éventuel de l'article après soufflage, tel que notamment un traitement superficiel d'imperméabilisation. Ce traitement superficiel peut intervenir sur une surface de l'article non marquée, ou l'encre mise en oeuvre peut être choisie afin d'être compatible avec le traitement superficiel.

Le procédé selon la présente invention permet le marquage d'un article en vue de contrôler notamment le positionnement de la paraison dans le moule de soufflage par l'examen de la position finale des marques sur l'article au regard de la position où elles ont été réalisées sur la paraison. Par la déformation finale des marques, le procédé offre également une indication intéressante quant à la direction et à l'amplitude de l'étirage auquel l'emplacement marqué a été soumis lors du soufflage.

La présente invention a dès lors également pour objet l'utilisation d'un procédé de marquage tel que décrit-ci-dessus, pour contrôler la production d'articles en matière thermoplastique par extrusion-soufflage, comprenant une étape de contrôle de la position effective du marquage sur l'article produit, une comparaison de cette position effective avec une position de référence prédéfinie et une adaptation en conséquence de certains paramètres opératoires pour les cycles de production suivants.

Pour les différentes définitions relatives à cet aspect de l'invention, on se référera notamment aux notions communes antérieurement définies.

Quant au contrôle de la position effective du marquage sur l'article produit, il peut être réalisé de toute manière connue. Dans le cas particulier d'utilisation d'une encre fluorescente, il sera réalisé en soumettant l'article à un rayonnement lumineux de longueur d'onde adaptée. Ce contrôle peut être réalisé à l'intervention d'un opérateur ou de manière automatisée. De manière préférée, il est réalisé de manière automatisée.

La comparaison de la position effective du marquage avec une position de référence prédéfinie peut également être réalisée de toute manière connue. Cette comparaison peut être réalisée à l'intervention d'un opérateur ou de manière automatisée. De manière préférée, elle est réalisée de manière automatisée. Les résultats de cette comparaison sont avantageusement enregistrés afin de permettre un traitement éventuellement intégré des résultats et de faire apparaître d'éventuelles évolutions dans le temps.

En conséquence de cette comparaison, certains paramètres opératoires peuvent être adaptés pour les cycles de production suivants. L'adaptation peut porter sur de nombreux paramètres opératoires, tels que, de manière non limitative, les paramètres d'extrusion (températures, vitesses,...) et les temps opératoires (début, durée et fin d'extrusion, de marquage, de présoufflage éventuel, de soufflage, ...). Cette adaptation peut être introduite sur base des résultats correspondant au dernier article produit ou de manière intégrée sur base des résultats correspondant à un nombre déterminé de cycles. De préférence, l'adaptation est introduite sur base des résultats correspondant à plusieurs cycles, afin de lisser les résultats obtenus et de réduire l'incidence d'un résultat qui serait manifestement erroné. L'adaptation de paramètres peut être réalisée à l'intervention d'un opérateur ou de manière automatisée. De manière préférée, elle est réalisée de manière automatisée.

De manière particulièrement préférée, le contrôle de la position effective du marquage sur l'article produit, la comparaison de cette position effective avec une position de référence prédéfinie et l'adaptation en conséquence de certains paramètres opératoires pour les cycles de production suivants peuvent être effectués de manière automatisée.

L'utilisation du procédé pour le contrôle de production peut également être avantageusement associé à un procédé ou à un système de contrôle plus large intégrant et rétroagissant sur d'autres paramètres opératoires.

L'invention est illustrée de manière non limitative par l'exemple suivant.

### Exemple

Une paraison coextrudée comprenant 6 couches, de structure PEHD vierge/PEHD rebroyé/PEgAM/EVOH/PEgAM/PEHD vierge (PEHD vierge en surface = ELTEX® K4606 de SOLVAY, PEgAM = polyéthylène greffé d'anhydride maléique, EVOH = copolymère partiellement hydrolysé d'acétate de vinyle et d'éthylène), a été extrudée en vue de la production d'un réservoir à carburant. Cette paraison a été façonnée par des outils VWDS-WBK (Vertical Wall Distribution System - Wall Schlauchbildung korrektur), PWDS(Profile Wall Distribution System), SFDR (Static Flexible Deformable Ring). La paraison, qui se trouvait alors à une température d'environ 200°C, a été marquée superficiellement par une encre à base de 1 % en poids de (2,5-bis-(5'-tert-butyl-benzoxazolyl-(2'))thiophène) UVITEX® OB dissout dans 99 % en poids de trichloréthane SOLVETHANE® de SOLVAY. Elle a été injectée à partir d'un circuit d'alimentation avec une unité de filtration, sous une pression d'environ 3.10⁵ Pa régulée par une pompe à engrenages, à partir d'une série de 12 injecteurs électriques BOSCH 0280.150.703 positionnés selon 12 azimuts. Les injecteurs étaient pilotés par un bloc électronique envoyant les impulsions de commande en fonction de la matrice introduite par l'opérateur et synchronisant ces impulsions dans une séquence activée et arrétée par le programme y intégré.

444 marques ont été apposées, qui indiquaient notamment les effets des outils de façonnage de la paraison. Les marques appliquées avaient une dimension de 6 à 8 mm avant soufflage.

Ce dispositif de marquage a fonctionné sans blocage des injecteurs ni purge du système durant 10 jours en continu de même qu'après un arrêt d'une durée de trois semaines

Après marquage, la paraison a été présoufflée puis soufflée dans un moule et l'article soufflé, un réservoir d'un volume intérieur de 80 litres, a été extrait du moule.

Une unité d'éclairage du réservoir à une longueur d'onde 3750-3850 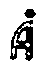 a permis de visualiser le marquage sur le réservoir produit.

La position effective du marquage a été contrôlée de manière automatisée. Cette position effective a été ensuite comparée avec une position de référence digitalisée et enregistrées dans l'automate. Les différences ont été relevées et des changements de consignes ont été transmis sur certains paramètres d'extrusion de la paraison et de façonnage. Ces changements de consignes ont également été enregistrés comme nouveaux paramètres dans l'automate de contrôle.

## Revendications

1. Procédé de marquage d'un article en matière thermoplastique produit par extrusion d'une paraison et soufflage de ladite paraison, selon lequel la paraison extrudée est marquée avant soufflage par au moins un jet d'une encre à base d'un composé qui cristallise sous forme aciculaire lors du séchage.

2. Procédé selon la revendication 1, selon lequel l'encre est mise en oeuvre en solution avec un solvant à base de chlore.

3. Procédé selon l'une quelconque des revendications précédentes, selon lequel l'encre est fluorescente.

4. Procédé selon l'une quelconque des revendications précédentes, selon lequel le composé qui cristallise sous forme aciculaire lors du séchage est le (2,5-bis-(5'-tert-butyl-benzoxazolyl-(2'))thiophène).

5. Procédé selon l'une quelconque des revendications précédentes, selon lequel la paraison extrudée est marquée en plusieurs positions distinctes.

6. Procédé selon l'une quelconque des revendications précédentes, selon lequel la paraison extrudée est façonnée en au moins un emplacement avant d'être marquée en cet emplacement.

7. Procédé selon l'une quelconque des revendications précédentes, selon lequel l'article est un réservoir à carburant.

8. Procédé selon l'une quelconque des revendications précédentes, selon lequel la paraison est d'épaisseur non constante.

9. Procédé selon l'une quelconque des revendications précédentes, dans lequel la paraison extrudée est, au moins quant à la surface de marquage, à base de polyoléfine.

10. Utilisation du procédé selon une quelconque des revendications précédentes pour contrôler la production d'articles en matière thermoplastique par extrusion-soufflage, **caractérisée en ce qu'**elle comprend une étape de contrôle de la position effective du marquage sur l'article produit, une comparaison de cette position effective avec une position de référence prédéfinie et une adaptation en conséquence de certains paramètres opératoires pour les cycles de production suivants.

## Patentansprüche

1. Verfahren zum Markieren eines Gegenstands aus thermoplastischem Kunststoff, hergestellt durch Extrusion eines Vorformlings und Blasformen besagten Vorformlings, gemäß dem der extrudierte Vorformling vor dem Blasformen durch wenigstens einen Strahl einer Druckfarbe auf der Basis einer Verbindung, die beim Trocknen nadelförmig kristallisiert, markiert wird.

2. Verfahren gemäß Anspruch 1, gemäß dem die Druckfarbe in Lösung mit einem Lösungsmittel auf Chlorbasis eingesetzt wird.

3. Verfahren gemäß einem der vorhergehenden Ansprüche, gemäß dem die Druckfarbe fluoresziert.

4. Verfahren gemäß einem der vorhergehenden Ansprüche, gemäß dem die Verbindung, die beim Trocknen nadelförmig kristallisiert, (2,5-Bis-(5'-tert.-butylbenzoxazolyl-(2'))thiophen) ist.

5. Verfahren gemäß einem der vorhergehenden Ansprüche, gemäß dem der extrudierte Vorformling an mehreren verschiedenen Positionen markiert wird.

6. Verfahren gemäß einem der vorhergehenden Ansprüche, gemäß dem der extrudierte Vorformling an wenigstens einer Stelle geformt wird, bevor er an dieser Stelle markiert wird.

7. Verfahren gemäß einem der vorhergehenden Ansprüche, gemäß dem der Gegenstand ein Treibstoffbehälter ist.

8. Verfahren gemäß einem der vorhergehenden Ansprüche, gemäß dem der Vorformling keine konstante Dicke hat.

9. Verfahren gemäß einem der vorhergehenden Ansprüche, bei dem der extrudierte Vorformling wenigstens hinsichtlich der Oberfläche zum Markieren auf der Basis eines Polyolefins ist;

10. Anwendung des Verfahrens gemäß einem der vorhergehenden Ansprüche zur Kontrolle der Herstellung von Gegenständen aus thermoplastischem Kunststoff durch Extrusionsblasformen, **dadurch gekennzeichnet, dass** sie einen Schritt zur Kontrolle der tatsächlichen Position der Markierung auf dem hergestellten Gegenstand, einen Vergleich dieser tatsächlichen Position mit einer vordefinierten Bezugsposition und als Folge eine Anpassung bestimmter Arbeitsparameter für folgende Produktionszyklen umfasst.

## Claims

1. Process for marking a thermoplastic article produced by extrusion of a parison and blow moulding of the said parison, in which the extruded parison is marked before blow moulding by at least one jet of an ink based on a compound which crystallizes in acicular form during drying.

2. Process according to claim 1, in which the ink is employed in solution with a chlorine-based solvent.

3. Process according to any one of the preceding claims, in which the ink is fluorescent.

4. Process according to any one of the preceding claims, in which the compound which crystallizes in acicular form during drying is 2,5-bis(5'-*tert*-butyl-2'-benzoxazolyl)thiophene.

5. Process according to any one of the preceding claims, in which the extruded parison is marked at several separate positions.

6. Process according to any one of the preceding claims, in which the extruded parison is shaped at at least one point before being marked at this point.

7. Process according to any one of the preceding claims, in which the article is a fuel tank.

8. Process according to any one of the preceding claims, in which the parison has a non-constant thickness.

9. Process according to any one of the preceding claims, in which the extruded parison is, at least with regard to the marking surface, based on a polyolefin.

10. Use of the process according to any one of the preceding claims, for checking the production of thermoplastic articles by extrusion-blow moulding, **characterized in that** it comprises a step of cheking the actual position of the marking on the article produced, a comparison of this actual position with a predefined reference position and, consequently, a modification of certain operating parameters for the following production cycles.
